# EUROPÄISCHE PATENTSCHRIFT

(11) **EP 2 582 000 B1**
(45) Veröffentlichungstag und Bekanntmachung des Hinweises auf die Patenterteilung: **14.05.2014**
(21) Anmeldenummer: 11185255.4
(22) Anmeldetag: 14.10.2011
(51) Int. Cl.: H02B 1/052

(54) **Gehäuse eines elektrischen oder elektronischen Gerätes**
Housing for an electrical or electronic device
Boîtier d'un appareil électrique ou électronique

(43) Veröffentlichungstag der Anmeldung: 17.04.2013
(73) Patentinhaber: Siemens Aktiengesellschaft, 80333 München (DE)
(72) Erfinder: Hofbauer, Edwin, 1120 Wien (AT); Trettenbrein, David, 2230 Gänserndorf (AT)

(56) Entgegenhaltungen:
- FR-A1- 2 616 035
- US-A- 4 067 529
- US-A1- 2010 314 522
- US-B1- 6 563 697

## Beschreibung

Die Erfindung betrifft ein Gehäuse eines elektrischen oder elektronischen Gerätes mit einer Gehäuserückwand, welche einen Einhänge- und Rastmechanismus zum Befestigen auf einer Normschiene aufweist, wobei dieser Einhänge- und Rastmechanismus wenigstens eine obere unbewegliche Klaue und eine bewegliche untere Klaue umfasst, wobei gegenüber der oberen unbeweglichen Klaue ein unterer Gehäuserückwandabschnitt ausgebildet ist, der mit der unteren beweglichen Klaue mittels einer Federstruktur verbunden ist, wobei die untere bewegliche Klaue über ein Verbindungselement mit einer Fingerlasche verbunden ist, welche über eine untere Gehäusewand hinausragt und wobei die Gehäuserückwand mit den Klauen der Federstruktur und der Fingerlasche einstückig ausgebildet ist. Ein solches Gehäuse ist aus der Schrift US 4 067 529 A bekannt.

In Schaltschränken oder sonstigen Elektroinstallationseinrichtungen sind üblicherweise Schienen als Halterungen für diverse elektrische oder elektronische Geräte vorgesehen. Diese Schienen weisen standardisierte Querschnittsmaße auf und werden deshalb auch als Normschienen bezeichnet. Die standardisierten Maße einer Normschiene legen dabei die Anschlussformen des Einhänge- und Rastmechanismus eines Gerätes fest, welches auf einer Normschiene montierbar sein soll.

In der Regel umfasst ein derartiger Einhänge- und Rastmechanismus eine gegenüber dem Gerät bzw. einem Gerätegehäuse unbewegliche Klaue und eine gegenüber dem Gerät bzw. dem Gerätegehäuse bewegliche Klaue bzw. Klinke. Als Klinke ist dabei ein kurzer, drehbar gelagerter Hebel bezeichnet. Die Rastung des Geräts wird mittels der beweglichen Klaue bzw. Klinke bewerkstelligt. Bei einer Geräteinstallation wird das Gerät üblicherweise mit der oberen Klaue an der Oberseite der Normschiene eingehängt. Im Zuge einer Schwenkbewegung nach unten erfolgt in weiterer Folge die Rastung, indem die bewegliche Klaue bzw. Klinke an der Unterseite der Normschiene einhakt. Die bewegliche Klaue bzw. Klinke wird dabei gegen eine Federkraft nach unten gedrückt, bis die Endposition erreicht ist und die Klaue bzw. Klinke infolge der Federkraft einschnappt. Die untere Schienenkante ist so ausgeführt, dass die bewegliche Klaue mit dieser verhakt.

Zum Lösen des auf diese Weise befestigten Geräts muss die bewegliche Klaue bzw. Klinke entriegelt werden. Dies geschieht im einfachsten Fall durch Aushebeln mittels eines passenden Werkzeugs, z.B. eines Schraubendrehers. Sofern die bewegliche Klaue bzw. Klinke einen aus dem Gehäuse herausragenden Fortsatz aufweist, erfolgt das Entriegeln durch Fingerdruck auf diesen Fortsatz.

Nach dem Stand der Technik ist die bewegliche Klaue beispielsweise als ein Klinkenschieber in einer Führung an der Rückseite des Gehäuses eingesetzt. Eine solche Ausführung ist bespielsweise aus der FR 2 709 613 A1 bekannt. Dabei übt eine gegen das Gehäuse abgestützte Feder eine Kraft auf den Klinkenschieber aus.

Eine einfache Ausführung mit einem Klinkenschieber, der mit blattfederförmigen Elementen einstückig an einem Gehäuse angebracht ist, geht aus der DE 298 12 489 U1 hervor. Dabei sind jedoch nur geringe Federwege realisierbar. Für schwerere Geräte ist diese Lösung nicht geeignet, weil die Gefahr besteht, dass sich infolge des Gewichts der Rastmechanismus von selbst löst. Auch die DE 20 2004 019 381 U offenbart einen Rastmechanismus, der mit Blattfederelementen an einem Gehäuse angebracht ist.

Aus der DE 314 93 29 A1 ist ein Montagefuß zur Befestigung eines elektronischen Geräts auf einer Normschiene angegeben. Zudem ist mit diesem Montagefuß die Montage auf einer Tragschiene möglich, bei die dem Montagefuß zugekehrte Seite vollständig oder teilweise geschlossen ist. Die dazu erforderlichen elastischen Fortsätze führen jedoch dazu, dass der Montagefuß die Gerätetiefe erheblich vergrößert.

Eine Ausführungsform mit einer elastischen Klinke ist aus der NL 8 304 219 A bekannt. Die abstehende Klinke mit einem zum Lösen vorgesehenen Hebel benötigt viel Platz. Ein ähnlicher Mechanismus ist in der EP 0 300 065 A1 offenbart. Hier ist zusätzlich ein Sperrhebel zur Arretierung der elastischen Klinke angeordnet, mit entsprechendem Platzbedarf.

Auch die FR 2 616 035 A1 offenbart ein gattungsgemäßes Gehäuse mit einer Fingerlasche zum Lösen, wobei der benötigte Platzbedarf für die angegebene Federstruktur nachteilig ist.

Einen Mechanismus mit Arretierung ist auch in der DE 10 2004 062 524 A1 bzw. in der US 2008/0186657 A1 offenbart, wobei hier ein Klinkenschieber in ein zweiteiliges Gehäuse integriert ist. Ein Arretierungselement ist dabei mittels einer meanderförmigen Feder mit dem eigentlichen Rastmechanismus verbunden, wobei der Rastmechanismus mittels Blattfederelemente an ein Gehäuse angeschlossen ist. Einen ähnlichen Arretierungsmechanismus ohne meanderförmiger Feder offenbart die DE 10 2006 030 953 A1.

Einen Einhänge- und Rastmechanismus, der in zwei Gehäusehälften integriert ist, offenbart auch die EP 0 602 305 A1. Die Fertigung dieses Mechanismus erfordert mehrere Schritte, weil neben der Zusammensetzung der beiden Hälften ein Klinkenschieberteil in eine Führung eingelegt werden muss.

Die aus der US 4 067 529 A bekannt Lösung hat den Nachteil, dass ein Lösen des Gehäuses von der Schiene nicht in allen Einbausituationen auf einfache Weise erfolgen kann.

Der Erfindung liegt die Aufgabe zugrunde, für ein Gehäuse der eingangs genannten Art eine Verbesserung gegenüber dem Stand der Technik anzugeben.

Erfindungsgemäß wird diese Aufgabe gelöst durch ein Gehäuse gemäß Anspruch 1. Verbesserungen sind in abhängigen Ansprüchen angegeben.

Dabei weist die Fingerlasche einen zur Gänze im über die untere Gehäusewand hinausragenden Bereich liegenden Durchbruch zum Durchführen eines Fingers auf und das Verbindungselement weist oberhalb der Fingerlasche eine zusätzliche Ausnehmung zum Lösen der unteren beweglichen Klaue mittels eines dünnen Werkzeugs auf. Ein solches Gehäuse ist einfach herzustellen und zu montieren. Mittels Fingerlasche ist der Rastmechanismus lösbar, sodass das elektrische oder elektronische Gerät ohne Hilfswerkzeug von der Normschiene abnehmbar ist.

Die zusätzliche Ausnehmung dient dazu, die untere bewegliche Klaue bei besonders engen Platzverhältnissen von der Normschiene zu lösen.

Für eine vorteilhafte kostengünstige Herstellung ist die Gehäuserückwand als Spritzgussteil ausgebildet.

Eine vorteilhafte Anordnung sieht vor, dass die untere bewegliche Klaue im Bereich einer mittleren Vertikalen der Gehäuserückwand angeordnet ist und dass beiderseits dieser mittleren Vertikale jeweils eine obere unbewegliche Klaue angeordnet ist. Das Gerät ist somit im montierten Zustand in einer eindeutig bestimmten Lage an drei Stellen auf der Normschiene fixiert.

In einer Weiterbildung der Erfindung ist das Verbindungselement als ein vertikaler Steg ausgebildet, an dessen oberem Ende die bewegliche Klaue angeschlossen ist und an dessen unterem Ende die Fingerlasche angeschlossen ist, wobei zu beiden Seiten des Stegs jeweils ein Federpaket angeordnet ist. Damit ist eine kompakte Anordnung geben, wobei die beiden Federpaket eine translatorische Führung des vertikalen Stegs und somit der beweglichen unteren Klaue bewirken.

Dabei ist es günstig, wenn jedes Federpaket mehrere Plattfedern umfasst, die mit einem Ende an den vertikalen Steg und mit dem anderen Ende an den unteren Gehäuserückwandabschnitt angeschlossen sind. Durch die Anordnung mehrerer Plattfedern ist einerseits eine sichere Verbindung des vertikalen Stegs mit den übrigen Elementen der Gehäuserückwand gegeben und andererseits ist durch Variation der Plattfederanzahl die Federkraft skalierbar. Eine vorteilhafte Ausprägung der Erfindung sieht vor, dass die Gehäuserückwand plattenförmig ausgebildet ist, mit einer vorderen vertikalen Ebene und einer hinteren vertikalen Ebene und dass die Klauen, die Federstruktur und die Fingerlasche zwischen diesen Ebenen angeordnet sind. Auf diese Weise ist die Gehäuserückwand mit dem Einhänge- und Rastmechanismus besonders kompakt, sodass die gesamte Gehäusetiefe minimiert ist und das Gerät wenig Platz in einem Geräteschrank benötigt.

Die Erfindung wird nachfolgend in beispielhafter Weise unter Bezugnahme auf die beigefügten Figuren erläutert. Es zeigen in schematischer Darstellung:
- Fig. 1: Gehäuse in Schrägansicht von hinten ohne Normschiene
- Fig. 2: Gehäuse in Schrägansicht auf einer Normschiene befestigt
- Fig. 3: Detailansicht der unteren Klaue mit der Federstruktur

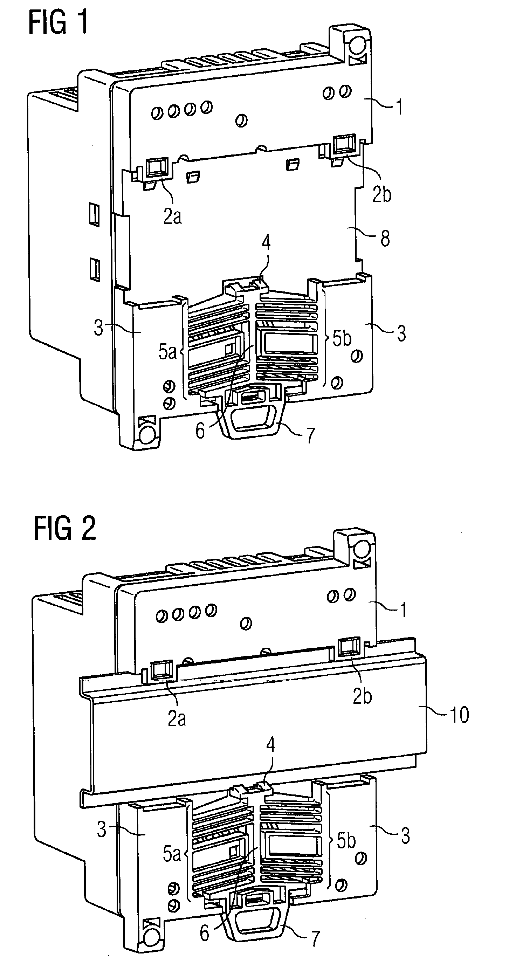

Das beispielhafte Gehäuse in Fig. 1 besteht aus einer Gehäuserückwand 1, auf den ein Gehäusedeckel aufgesetzt ist. Der Gehäusedeckel weist eine vordere Gehäusewand, zwei seitliche Gehäusewände sowie eine obere und eine untere Gehäusewand auf. In die Gehäuserückwand 1 ist ein Einhänge- und Rastmechanismus integriert, wobei als Betätigungselement zum Lösen des Rastmechanismus eine Fingerlasche 7 vorgesehen ist. Diese Fingerlasche 7 ragt an der Gehäuseunterseite über die untere Gehäusewand des Gehäusedeckels hinaus, sodass eine freie Zugänglichkeit gegeben ist.

Die Fingerlasche 7 ist über ein Verbindungselement 6 mit der unteren beweglichen Klaue 4 verbunden. Dieses Verbindungselement 6 ist in einer vorteilhaften Ausgestaltung als vertikaler Steg ausgebildet, an dem beiderseits Federpakte 5a, 5b anschließen. Jedes Federpaket 5a, 5b besteht dabei aus mehreren Plattfedern, die im vorgespannten Zustand eine vertikale Kraft auf die untere bewegliche Klaue 4 ausüben und Führungselemente zur vertikalen translatorischen Führung der unteren Klaue 4 bilden.

Die untere bewegliche Klaue 4 ist im Bereich einer vertikalen Mittellinie der Gehäuserückwand 1 angeordnet. Zwei unbewegliche obere Klauen 2a, 2b sind in der dargestellten Ansicht links und rechts von dieser Mittellinie in Randbereichen der Gehäuserückwand 1 angeordnet.

Zur Befestigung des Geräts auf einer Normschiene 10 werden zunächst die beiden oberen Klauen 2a, 2b an einer Oberkante der Normschiene 9 eingehängt. Danach wird das Gerät nach unten geschwenkt, bis die untere bewegliche Klaue 4 an einer Unterkante der Normschiene 10 einrastet. Die untere bewegliche Klaue 4 weist dabei eine Abschrägung auf; diese bewirkt, dass die bewegliche Klaue 4 während des Einrastvorgangs mittels Normschienenunterkante nach unten gedrückt wird, bis das Gerät seine Endposition erreicht und die bewegliche Klaue 4 mittels Federkraft nach oben schnappt. Fig. 2 zeigt das auf der Normschiene 10 fixierte Gerät.

Als Gegenauflage der unteren beweglichen Klaue 4 ist eine horizontale durchgängige Ausnehmung 8 der plattenförmigen Gehäuserückwand vorgesehen. Die Höhe dieser Ausnehmung 8 entspricht in etwa der Höhe der Normschiene 10. Die Tiefe der Ausnehmung 8 ist auf die Ausgestaltung der Klauen 2a, 2b, 4 abgestimmt, wodurch eine spielfreie Fixierung des Gerätes auf der Normschiene 10 gegeben ist.

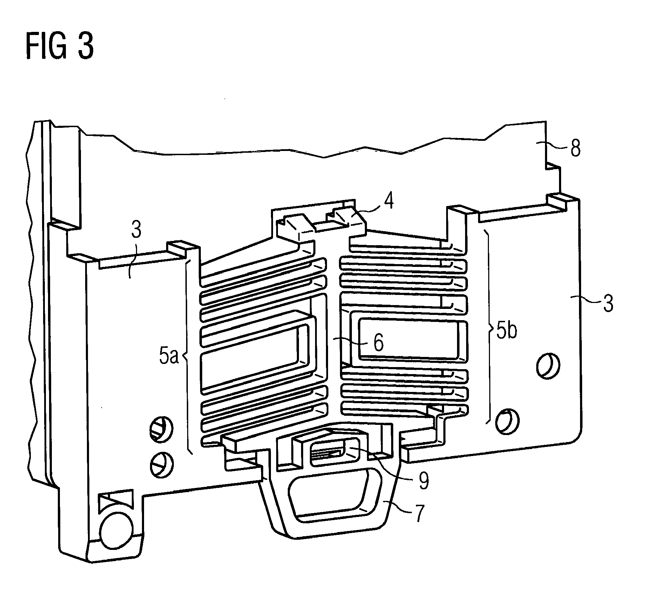

In Fig. 3 ist der untere Gehäuserückwandabschnitt 3 im Detail dargestellt. Im vorliegenden Beispiel sind zwei Federpaketen 5a, 5b vorgesehen. Jedes Federpaket 5a bzw. 5b ist einerseits mit einem linken bzw. rechten äußeren Bereich des unteren Gehäuserückwandabschnitts 3 und andererseits mit dem vertikalen Verbindungssteg 6 der unteren beweglichen Klaue 4 verbunden.

Bei geringeren Ansprüchen an die Befestigung eines Gerätes auf einer Normschiene ist ein Federpaket ausreichend. Eine solche nicht dargestellte Ausführungsform erhält man beispielsweise durch Weglassen eines Federpakets der oben beschriebenen Anordnung.

Um eine einfache Demontage des Geräts bei besonders engen Platzverhältnissen innerhalb eines Geräteschranks sicherzustellen ist es sinnvoll, im Verbindungselement 6 oberhalb der Fingerlasche 7 eine Ausnehmung 9 vorzusehen, die ein Lösen der unteren bewegliche Klaue mittels eines dünnen Werkzeugs erlaubt.

## Patentansprüche

1. Gehäuse eines elektrischen oder elektronischen Gerätes mit einer Gehäuserückwand (1), welche einen Einhänge- und Rastmechanismus zum Befestigen auf einer Normschiene (10) aufweist, wobei dieser Einhänge- und Rastmechanismus wenigstens eine obere unbewegliche Klaue (2a, 2b) und eine bewegliche untere Klaue (4) umfasst, wobei gegenüber der oberen unbeweglichen Klaue (2a, 2b) ein unterer Gehäuserückwandabschnitt (3) ausgebildet ist, der mit der unteren beweglichen Klaue (4) mittels einer Federstruktur (5a, 5b) verbunden ist, wobei die untere bewegliche Klaue (4) über ein Verbindungselement (6) mit einer Fingerlasche (7) verbunden ist, welche über eine untere Gehäusewand hinausragt und wobei die Gehäuserückwand (1) mit den Klauen ( 2a, 2b, 4), der Federstruktur (5a, 5b) und der Fingerlasche (7) einstückig ausgebildet ist, **dadurch gekennzeichnet, dass** die Fingerlasche (7) einen zur Gänze im über die untere Gehäusewand hinausragenden Bereich liegenden Durchbruch zum Durchführen eines Fingers aufweist und dass das Verbindungselement (6) oberhalb der Fingerlasche (7) eine zusätzliche Ausnehmung (9) zum Lösen der unteren beweglichen Klaue (4) mittels eines dünnen Werkzeugs aufweist.

2. Gehäuse nach Anspruch 1, , **dadurch gekennzeichnet, dass** die Gehäuserückwand (1) als Spritzgussteil ausgebildet ist.

3. Gehäuse nach Anspruch 1 oder 2, **dadurch gekennzeichnet, dass** die untere bewegliche Klaue (4) im Bereich einer mittleren Vertikalen der Gehäuserückwand (1) angeordnet ist und dass beiderseits dieser mittleren Vertikale jeweils eine obere unbewegliche Klaue (2a, 2b) angeordnet ist.

4. Gehäuse nach einem der Ansprüche 1 bis 3, **dadurch gekennzeichnet, dass** das Verbindungselement (6) als ein vertikaler Steg ausgebildet ist, an dessen oberem Ende die bewegliche Klaue (4) angeschlossen ist und an dessen unterem Ende die Fingerlasche (7) angeschlossen ist und dass zu beiden Seiten des Stegs jeweils ein Federpaket (5a, 5b) angeordnet ist.

5. Gehäuse nach Anspruch 3, **dadurch gekennzeichnet, dass** jedes Federpaket (5a, 5b) mehrere Plattfedern umfasst, die mit einem Ende an den vertikalen Steg und mit dem anderen Ende an den unteren Gehäuserückwandabschnitt (3) angeschlossen sind.

6. Gehäuse nach einem der Ansprüche 1 bis 5, **dadurch gekennzeichnet, dass** die Gehäuserückwand (1) plattenförmig ausgebildet ist, mit einer vorderen vertikalen Ebene und einer hinteren vertikalen Ebene und dass die Klauen (2a, 2b, 4), die Federstruktur (5a, 5b) und die Fingerlasche (7) zwischen diesen Ebenen angeordnet sind.

7. Gehäuse nach Anspruch 6, **dadurch gekennzeichnet, dass** die plattenförmige Gehäuserückwand (1) eine durchgehende horizontale Ausnehmung (8) zur Aufnahme der Normschiene (10) aufweist.

## Claims

1. Housing for an electrical or electronic device comprising a housing rear wall (1) having a hanging and detent mechanism for fastening to a standard rail (10), said hanging and detent mechanism comprising at least one upper immovable claw (2a, 2b) and one lower movable claw (4), wherein opposite the upper immovable claw (2a, 2b) a lower housing rear wall section (3) is embodied which is connected to the lower movable claw (4) by means of a spring structure (5a, 5b), wherein the lower movable claw (4) is connected via a connecting element (6) to a finger tab (7) which projects beyond a lower housing wall and wherein the housing rear wall (1) is embodied in one piece with the claws (2a, 2b, 4), the spring structure (5a, 5b) and the finger tab (7), **characterised in that** the finger tab (7) has an opening lying entirely in the region projecting beyond the lower housing wall for inserting a finger therethrough and **in that** the connecting element (6) has an additional recess (9) above the finger tab (7) for releasing the lower movable claw (4) by means of a thin tool.

2. Housing according to claim 1, **characterised in that** the housing rear wall (1) is embodied as an injection-moulded part.

3. Housing according to claim 1 or 2, **characterised in that** the lower movable claw (4) is arranged in the region of a central vertical line of the housing rear wall (1) and **in that** on each of the two sides of this central vertical line, an upper immovable claw (2a, 2b) is arranged.

4. Housing according to one of claims 1 to 3, **characterised in that** the connecting element (6) is embodied as a vertical bar, the upper end of which is joined to the movable claw (4) and the lower end of which is joined to the finger tab (7) and **in that** on each of the two sides of the bar a spring packet (5a, 5b) is arranged.

5. Housing according to claim 3, **characterised in that** each spring packet (5a, 5b) comprises a plurality of flat springs, which are joined at one end to the vertical bar and at the other end to the lower housing rear wall section (3).

6. Housing according to one of claims 1 to 5, **characterised in that** the housing rear wall (1) is embodied as plate-shaped, with a front vertical plane and a rear vertical plane and **in that** the claws (2a, 2b, 4), the spring structure (5a, 5b) and the finger tab (7) are arranged between these planes.

7. Housing according to claim 6, **characterised in that** the plate-shaped housing rear wall (1) has a horizontal recess (8) therethrough for receiving the standard rail (10).

## Revendications

1. Boîtier d'un appareil électrique ou électronique comportant une paroi arrière de boîtier (1), qui présente un mécanisme d'accrochage et d'encliquetage pour la fixation à une glissière standard (10), dans lequel le mécanisme d'accrochage et d'encliquetage comprend au moins une griffe immobile supérieure (2a, 2b) et une griffe inférieure mobile (4), dans lequel à l'opposé de la griffe immobile supérieure (2a, 2b) est configurée une section de paroi arrière de boîtier (3), qui est reliée à la griffe mobile inférieure (4) au moyen d'une structure à effet ressort (5a, 5b), dans lequel la griffe mobile inférieure (4) est reliée à un passant pour le doigt (7) via un élément de liaison (6), lequel passant pour le doigt pénètre dans une paroi de boîtier intérieure et dans lequel la paroi arrière de boîtier (1) est configurée d'un seul tenant avec les griffes (2a, 2b, 4), la structure à effet ressort (5a, 5b) et le passant pour le doigt (7), **caractérisé en ce que** le passant pour le doigt (7) présente une ouverture se trouvant en totalité dans la zone pénétrant dans la paroi de boîtier inférieure afin de laisser passer un doigt et **en ce que** l'élément de liaison (6) présente au-dessus du passant pour le doigt (7) un évidement supplémentaire (9) pour détacher la griffe mobile inférieure (4) au moyen d'un outil fin.

2. Boîtier selon la revendication 1, **caractérisé en ce que** la paroi arrière de boîtier (1) est configurée en tant que pièce moulée par injection.

3. Boîtier selon la revendication 1 ou 2, **caractérisé en ce que** la griffe mobile inférieure (4) est disposée dans la zone d'une verticale centrale de la paroi arrière de boîtier (1) et **en ce que** des deux côtés de cette verticale centrale une griffe immobile supérieure (2a, 2b) est disposée.

4. Boîtier selon l'une des revendications 1 à 3, **caractérisé en ce que** l'élément de liaison (6) est configuré en tant qu'âme verticale, à l'extrémité supérieure de laquelle est raccordée la griffe mobile (4) et à l'extrémité inférieure de laquelle est raccordé le passant pour le doigt (7), et **en ce que** des deux côtés de l'âme est respectivement agencé un bloc-ressort (5a, 5b).

5. Boîtier selon la revendication 3, **caractérisé en ce que** chaque bloc-ressort (5a, 5b) comprend plusieurs ressorts plats, qui sont raccordés par une extrémité à l'âme verticale et par l'autre extrémité à la section de paroi arrière de boîtier inférieure (3).

6. Boîtier selon l'une des revendications 1 à 5, **caractérisé en ce que** la paroi arrière de boîtier (1) est configurée en forme de plaque, avec un plan vertical avant et un plan vertical arrière et **en ce que** les griffes (2a, 2b, 4), la structure à effet ressort (5a, 5b) et le passant pour le doigt (7) sont disposés entre ces plans.

7. Boîtier selon la revendication 6, **caractérisé en ce que** la paroi arrière de boîtier en forme de plaque (1) présente un évidement horizontal continu (8) pour loger la glissière standard (10).
